(19) Europäisches Patentamt
European Patent Office
Office européen des brevets

(11) Publication number: **0 054 014**
**B1**

(12) **EUROPEAN PATENT SPECIFICATION**

(45) Date of publication of patent specification: **10.04.85**

(51) Int. Cl.[4]: **C 01 G 43/01,** C 22 B 60/02

(21) Application number: **81890188.6**

(22) Date of filing: **13.11.81**

# (54) Method of removing phosphorus impurities from yellowcake.

(30) Priority: **24.11.80 US 210063**

(43) Date of publication of application:
**16.06.82 Bulletin 82/24**

(45) Publication of the grant of the patent:
**10.04.85 Bulletin 85/15**

(84) Designated Contracting States:
**AT BE CH DE FR GB IT LI LU NL SE**

(56) References cited:
**FR-A-2 429 747**
**GB-A- 846 861**
**US-A-3 156 525**
**US-A-4 024 215**

(73) Proprietor: **FMC Corporation**
**2000 Market Street**
**Philadelphia Pennsylvania 19103 (US)**

(72) Inventor: **Brown, Richard Alexander**
**112 Glendale Drive**
**Trenton New Jersey 08618 (US)**
Inventor: **Winkley, Donald Charles**
**7009 Edgebrook**
**Corpus Christi Texas 78418 (US)**

(74) Representative: **Pawloy, Heinrich, Dr. et al**
**Riemergasse 14**
**A-1010 Wien (AT)**

**EP 0 054 014 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

This invention relates to the upgrading of uranium values, particularly to the removal of phosphorus impurities from yellowcake.

In the mining of uranium, crushed uranium minerals are leached with acid or alkali and the resulting leach liquor upgraded to give a concentrated uranium solution from which the solid uranium values are recovered. Sulfuric acid and sodium carbonate are the two commonly used leaching agents. In the case of alkaline leaching with sodium carbonate, the clarified, leach liquor containing soluble complex uranium compounds such as $Na_4UO_2(CO_3)_3$ is reacted with sodium hydroxide to precipitate the uranium as sodium diuranate ($Na_2U_2O_7$) or "Yellowcake". In the case of acid leaching, the acid leach liquor containing uranyl ions, $UO_2^{++}$ is subjected to solvent extraction or treatment with ion exchange resins to remove the uranium values which are then eluted from the resin or stripped from the solvent thereby producing a concentrated uranyl solution followed by yellowcake precipitation. For a fuller treatment on the chemistry and refining of uranium, reference is made to the review article entitled "Uranium and Uranium Compounds" in Kirk-Othmer Encyclopedia of Chemical Technology, 2nd Ed., Vol. 21, pages 1—35.

Although generally satisfactory, the aforedisclosed prior art techniques for uranium refining may yield uranium concentrates containing impurities which are difficult to remove. An especially intractable contaminant is the element phosphorus, which coprecipitates as uranyl phosphates with the yellowcake. Yet product purity is important since processors of such concentrates to uranium hexafluoride impose price penalties in proportion to the level of impurities.

It has been suggested to upgrade uranium concentrates by treating uranyl solutions with hydrogen peroxide whereby the uranium values are precipitated as highly insoluble uranium peroxide. The reaction, which is well known, can be represented by the following equation:

$$UO_2^{++}+H_2O_2+XH_2O \rightarrow UO_4 \cdot XH_2O+2H^+$$

wherein X is most commonly 2. Uranium peroxide is reported to be the least soluble of uranium compounds and its precipitation from uranyl solutions can be made essentially quantitative. Generally speaking, the technique is simple to carry out and leads to a high quality product.

However, attempts to upgrade phosphorus contaminated uranium concentrates such as yellowcake by dissolving it in acid and precipitating uranium peroxide by treating the resultant uranyl solution with hydrogen peroxide in the known manner have not been practicable owing to excessive coprecipitation of uranyl phosphates.

In accordance with the present invention, there is provided a method of removing phosphorus impurities from uranium yellowcake comprising the steps of:

(a) dissolving the yellowcake in concentrated sulfuric or hydrochloric acid to give a uranyl solution having a pH of about 2 and a $U_3O_8$ assay of about 100 to 200 g/l;

(b) adding sufficient hydrogen peroxide to precipitate uranium peroxide and leave the phosphate impurities substantially dissolved while maintaining the pH of the reaction mixture between 2.2 to 2.6;

(c) maintaining the reactants in contact until precipitation of the uranium is essentially complete; and

(d) recovering the uranium peroxide from dissolved phosphate impurities.

The present invention is predicated on the discovery that in the precipitation of uranium peroxide by reacting uranyl ions with hydrogen peroxide, coprecipitation of phosphorus impurities can be greatly suppressed and optimum yields of the uranium peroxide maintained by conducting the reaction in an acidic, highly concentrated solution of uranyl ions, having a low ratio of acid ion to $U_3O_8$ under conditions which minimize decomposition of the hydrogen peroxide. Thus, to an acidic uranyl solution having a pH of about 2, an acid ion to $U_3O_8$ ratio of about 0.65 to 0.80 and an $U_3O_8$ assay of about 100 to 200 g/l, there is added sufficient hydrogen peroxide to react with the uranyl ions and form a precipitate of uranium peroxide; pH of the reaction mixture is maintained in the range of 2.2 to 2.6; hydrogen peroxide is added incrementally over a 2 to 3 hour interval to mitigate decomposition; ratio of hydrogen peroxide to $U_3O_8$ is 0.2 to 0.3 g per g of $U_3O_8$. Concentration of hydrogen peroxide is not critical but is conveniently employed as a 30% to 50% aqueous solution, preferably about 30% to 40%.

The concentrated solution of uranyl ions is obtained by dissolving yellowcake containing phosphorus impurities in sulfuric or hydrochloric acid. As understood herein, yellowcake is an alkali metal or ammonium diuranate, preferably ammonium diuranate but also includes uranyl peroxide.

Normally, the lower the pH during precipitation of uranium peroxide, the lower the yield of product while at higher pH, yields are increased but coprecipitation of phosphorus impurities occurs. By operating in accordance with the process of the invention, however, these effects are overcome and high yields, that is, 80—90% of low phosphate uranium peroxide are produced.

Tables I—VI summarize the results of a series of experiments to determine the effects of pH, solution assay, total hydrogen peroxide and sequential addition of hydrogen peroxide and time on the purity and yield of uranium peroxide from the reaction of hydrogen peroxide with phosphorus contaminated uranyl solutions.

Table I shows that significant phosphate contamination occurs with peroxide precipitation. In all cases the phosphate level of the yellowcake exceeds the specification for contamination.

The pH at which the phosphate begins to precipitate is below the normal operating range of uranyl peroxide precipitation and ammonium diuranate precipitation. Table II shows that most of the phosphate present in solution precipitates at a pH of 2.6 and above. Ammonium diuranate precipitation occurs at pH of 6—7.5, well above the critical 2.6. With hydrogen peroxide precipitation, only a solution containing less than 20 g/l of chloride and/or sulfate will precipitate effectively at a pH much below 3.0 due to the formation of soluble uranyl complexes. At low pH values (3.0 or lower) uranyl peroxide precipitation will give very high barrens (>1 g/l) if there is more than 10 g/l sulfate and/or chloride present. With strip liquors having 10—30 g/l $U_3O_8$, a g/l loss would be unacceptable. Consequently, it appears that in order to completely recover the uranium present in a solution, pH values greater than 2.6 must be used; yet, at this pH, most of the phosphate will precipitate. As previously pointed out, the present invention resolves these incompatible parameters by controlling pH in combination with $U_3O_8$ assay while carrying out the uranium precipitation under conditions which mitigate decomposition of the hydrogen peroxide. These effects are discussed in greater detail in the ensuing description.

Effect of pH

In order to prevent the phosphate from precipitating with the uranium, the pH of the precipitation must be kept at 2.6 or below. However, the uranium barrens increase as the pH drops. Consequently, the pH must be balanced to give highest phosphate removal and lowest uranium barrens. Table II shows that at a pH of 2.6, there is a substantial, two-fold increase, in percent $PO_4$ removal, while the barrens are not dramatically increased when compared to the values at a pH of 3.2. Consequently, it is possible to significantly remove phosphate impurities while minimizing the barrens loss by keeping the pH at 2.6.

Effect of solution assay

Since the solution being precipitated by the herein process is made by redissolving an impure yellowcake, it is possible to control the ratio of uranium to the anions (chloride and sulfate) present in solution. Both chloride and sulfate form fairly strong complexes with uranium that can inhibit the precipitation reactions of either uranyl peroxide or uranyl phosphate. As can be seen from Table IV, as the ratio of sulfate to uranium increases, the percent phosphate removed increases. The sulfate inhibits the formation of the uranyl phosphate, by forming a uranyl sulfate. However, the effect of increasing sulfate on the barrens is undesirable as there is a substantial increase in the amount of uranium unprecipitated. Consequently, with high sulfate the pH must be raised to obtain low barrens, causing more phosphate to be precipitated. The best performance is obtained by minimizing the ratio of sulfate/chloride to uranium. This allows a lower precipitation pH and produces lower barrens. The lowest sulfate/chloride ratio is obtained by adding concentrated acid to the filtered/centrifuged impure yellowcake to obtain a uranium value of >150 g/l $U_3O_8$. This can be diluted if necessary. However, there is advantage to working with as concentrated solutions as possible: the solution volumes and consequently equipment sizes are minimized.

Total peroxide added

The total amount of peroxide added to the reprecipitation reaction does not have a significant effect on the amount of phosphate removed, but it does affect the total uranium recovery. In general, the more peroxide added, the lower the barrens. Table V shows the effect of the amount of peroxide added. The percent phosphate removed is not significantly changed, but the barrens are considerably lowered by increasing the amount of peroxide added.

Effect of time

Under the conditions of the precipitation of the low phosphate yellowcake, the hydrogen peroxide shows considerable decomposition. Although the phosphate removal is unaffected, the barrens will increase with time as shown in Table V. The longer the digestion time, the more the peroxide will decompose and the higher the resulting barrens. Consequently, it is important to minimize the digestion time. Enough time must be allowed for the reaction to occur, but excess time must be eliminated to prevent peroxide decomposition. The optimum digestion time is 2—3 hours.

The effect of peroxide incremental addition

A method of controlling the peroxide decomposition and to improve the barrens is to add the peroxide at different points in time. Table VI demonstrates that the barrens can be decreased by adding only 1/3—1/2 of the peroxide dosage in the front end and the remainder after 1/2—2/3 of the digestion time is expired. The sequential additions minimize peroxide decomposition.

In carrying out the process of the invention, the phosphorus contaminated uranyl solution is cooled to ambient temperature, and 1/3 to 1/2 of the peroxide dosage is added (dosage is 90—136 g $H_2O_2$ in solution). The pH is readjusted so that it is less than 2.6 (preferably 2.2—2.6), and the solution is stirred in a reactor (batch or continuous) for a total reaction time of 1—2 hours. At this point an additional peroxide dose (1/3—2/3 of the total) is added and the pH maintained at 2.2—2.6. The third incremental addition can be used to further minimize decomposition. After an additional hour, the solution is filtered, yielding a low phosphate uranyl peroxide.

The advantages of the process are that it produces a high purity product low in phosphate, sodium, and chloride while minimizing uranium losses. It is simple to operate and requires minimal equipment.

Reference is made to the following non-limiting examples.

Example 1

An impure yellowcake (28% solids) having a dry assay of 80.2% $U_3O_8$, .6% $PO_4$, .4% $SO_4$, 6.95% Na, and .14% Cl is redissolved with concentrated sulfuric acid to a pH of 2.0, yielding a solution containing 154 g/l $U_3O_8$, 125 g/l $SO_4$, and 2.52 g/l $PO_4$. When the solution is cooled to room temperature, 12.32 g $H_2O_2$/liter of solution is added (1/3 of a .24 g $H_2O_2$/g $U_3O_8$ dosage). The solution pH is adjusted to 2.6 and the solution stirred for 2 hours. At this point 24.64 g $H_2O_2$/liter of solution is added and the solution stirred an additional hour. The yellowcake produced is collected by filtration and has a dry assay of 91.5% $U_3O_8$, 0.73% $PO_4$, 1.3% $SO_4$, .009% Na, and .13% Cl. The barrens are less than 1 g/l $U_3O_8$.

Example 2

An impure yellowcake is dissolved in sulfuric acid to give a solution containing 46 g/l $U_3O_8$, .614 g/l $PO_4$ and 35.6 g/l $SO_4^{-2}$ at ambient temperature. 9.2 g $H_2O_2$/liter of solution is added to the solution, and the pH is adjusted to 2.6. The solution is stirred for 2 hours and the yellowcake is removed by filtration. 73% of the phosphate is removed from the yellowcake, and the barrens are 4.70 g/l $U_3O_8$.

Example 3

A solution containing 116 g/l $U_3O_8$, 77 g/l $SO_4^{-2}$ and 1.25 g/l $PO_4^{-3}$ made by dissolving an impure ammonium diuranate yellowcake with sulfuric acid was precipitated with hydrogen peroxide. After the solution was cooled .2 g $H_2O_2$/g $U_3O_8$ was added and the pH adjusted to 2.2. The solution was stirred for 3 hours and then filtered. 87.65% of the phosphate remained in solution and 95% of the uranium was recovered. The % $PO_4$ in the yellowcake was reduced from 1.07% to .14%.

Example 4

A solution containing 81 g/l $U_3O_8$, 54 g/l $SO_4^{-2}$ and .88 g/l $PO_3^{-3}$ was made by dissolving an impure ammonium diuranate in concentrated sulfuric acid. The pH of the solution was 2.0. .2 g $H_2O_2$/g $U_3O_8$ was added to the solution at room temperature and the pH was adjusted to 2.2. After 3 hours the uranyl peroxide was collected by filtration. 90.82% of the phosphate remained in solution and 93.5% of the uranium was recovered. The yellowcake showed .1% $PO_4$. When the peroxide is added incrementally over the three hour digestion period — 1/2 initially and the remainder after 2 hours — the barrens are reduced from 5.23 to 2.39 g/l without affecting the $PO_4$ removal.

TABLE I

Phosphate contamination of uranyl peroxide

| Strip liquor | | Conditions | | Yellowcake | |
|---|---|---|---|---|---|
| g/l $U_3O_8$ | g/l $PO_4^2$ | pHi* | pHp** | % $PO_4$ (avg.) | % $PO_4$ precipitated (avg.) |
| 9.48 | .083 | 1.6—3.5 | 3.5 | .29 | 41 |
| 3.72 | .042 | 1.6—3.5 | 3.5 | .31 | 35 |
| 8.25 | .140 | 1.6—3.5 | 3.5 | .82 | 57 |
| 8.03 | .079 | 1.6 | 3.5 | 1.04 | 77 |

*pHi is the pH of the solution before hydrogen peroxide is added.

**pHp is the pH of the solution during digestion of the precipitate after hydrogen peroxide has been added.

TABLE II
Effect of pH on phosphate Precipitation
Solution assay: 8.25 g/l $U_3O_8$, .14 g/l $PO_4^3$

| pHp | g/l $PO_4$ in solution | % $PO_4$ Precipitated |
|---|---|---|
| 1.6 | .128 | 17 |
| 1.8 | .105 | 25 |
| 2.2 | .108 | 23 |
| 2.6 | .021 | 85 |
| 3.0 | .006 | 96 |
| 3.5 | .006 | 98 |

pHp is the pH of the solution during digestion of the precipitate after hydrogen peroxide has been added.

TABLE III
Average effect of pH on barrens and % $PO_4$ removed assay:
46 g/l $U_3O_8$, .614 g/l $PO_4$, 35.6 g/l $SO_4$

| pHp | g/l $U_3O_8$ | % $PO_4$ Removed |
|---|---|---|
| 2.0 | 13.19 | 90.39 |
| 2.60 | 10.08 | 77.39 |
| 3.2 | 6.08 | 35.29 |

pHp is the pH of the solution during digestion of the precipitate after hydrogen peroxide has been added.

TABLE IV
Effect of sulfate to uranium ratio

| g/l $U_3O_8$ | Ratio $SO_4/U_3O_8$ | % $U_3O_8$ Recovered | % $PO_4$ Removed |
|---|---|---|---|
| 81 | .67 | 90.8 | 67.65 |
| 116 | .67 | 91.5 | 68.07 |
| 154 | .81 | 88.2 | 75.05 |
| 46 | .77 | 84.6 | 58.0 |
| 46 | 1.62 | 77.5 | 74.9 |
| 46 | 2.46 | 60.7 | 87.8 |

TABLE V
Effect of peroxide ratio and digestion time assay:
46 g/l $U_3O_8$, 75 g/l $SO_4^{-2}$, .614 g/l $PO_4$

| pHp | g $H_2O_2$/g $U_3O_8$ | Digestion time | Barrens g/l $U_3O_8$ | % $PO_4$ Removed |
|---|---|---|---|---|
| 2.6 | .15 | 2 | 14.20 | 87.43 |
| 2.6 | .25 | 2 | 2.00 | 84.47 |
| 2.6 | .15 | 4 | 20.15 | 87.17 |
| 2.6 | .25 | 4 | 11.45 | 82.81 |

pHp is the pH of the solution during digestion of the precipitate after hydrogen peroxide has been added.

TABLE VI
Effect of sequential peroxide addition initial concentration 154 g/l $U_3O_8$, 125 g/l $SO_4$

| Peroxide added g/g $U_3O_8$ | % Added initially | % Added at 2 hrs. | $U_3O_8$, g/l Barrens, 3 hrs. |
|---|---|---|---|
| .2 | 100 | 0 | 26.9 |
| .3 | 100 | 0 | 16.2 |
| .2 | 75 | 25 | 18.8 |
| .3 | 67 | 33 | 13.8 |
| .2 | 50 | 50 | 12.3 |
| .3 | 50 | 50 | 8.2 |
| .3 | 33 | 60 | .65 |

**Claims**

1. A method of removing phosphorus impurities from uranium yellowcake characterized by the steps of:

(a) dissolving the yellowcake in concentrated sulfuric or hydrochloric acid to give a uranyl solution having a pH of 2 and a $U_3O_8$ assay of 100 to 200 g/l;

(b) adding sufficient hydrogen peroxide to precipitate uranium peroxide and leave the phosphate impurities substantially dissolved while maintaining the pH of the reaction mixture at 2.2. to 2.6;

(c) maintaining the reactants in contact until precipitate of the uranium is essentially complete; and

(d) recovering the uranium peroxide from dissolved phosphate impurities.

2. Method of Claim 1 characterized in that the $U_3O_8$ assay is 150 to 200 g/l.

3. Method of Claim 2 characterized in that the reactants of step (c) are maintained in contact for 2 to 3 hours.

4. Method of Claim 3 characterized in that the uranium peroxide is recovered by filtration.

**Patentansprüche**

1. Verfahren zum Entfernen von Phosphorverunreinigungen aus gelbem Urankuchen, gekennzeichnet durch die Schritte des

a) Lösens des gelben Kuchens in konzentrierter Schwefel- oder Salzsäure, wobei eine Uranyllösung mit einem pH von 2 und einem $U_3O_8$-Gehalt von 100 bis 200 g/l erhalten wird,

b) Zusetzens von ausreichend Wasserstoffperoxid zum Ausfällen von Uranperoxid und Zurücklassen der Phosphatverunreinigungen, im wesentlichen gelöst, wobei der pH der Reaktionsmischung bei 2,2 bis 2,6 gehalten wird,

c) Inberührunghaltens der Reaktanten, bis die Ausfällung des Urans im wesentlichen beendet ist, und

d) Gewinnens des Uranperoxids aus gelösten Phosphatverunreinigungen.

2. Verfahren nach Anspruch 1, dadurch gekennzeichnet, daß der $U_3O_8$-Gehalt 150 bis 200 g/l beträgt.

3. Verfahren nach Anspruch 2, dadurch gekennzeichnet, daß die Reaktanten von Schritt c) 2 bis 3 h in Berührung gehalten werden.

4. Verfahren nach Anspruch 3, dadurch gekennzeichnet, daß das Uranperoxid durch Filtrieren gewonnen wird.

**Revendications**

1. Un procédé d'élimination d'impuretés phosphorées à partir d'un gâteau jaune d'uranium caractérisé par les stades de:

(a) dissolution du gâteau jaune dans de l'acide sulfurique ou de l'acide chlorhydrique concentrés pour obtenir une solution uranylique ayant un pH de 2 et un titre en $U_3O_8$ de 100 à 200 g/l;

(b) addition d'une quantité de peroxyde d'hydrogène suffisante pour précipiter le peroxyde d'uranium et laisser les impuretés phosphatées essentiellement dissoutes tout en maintenant le pH du mélange réactionnel entre 2,2 et 2,6;

(c) maintien des composés réagissants en contact jusqu'à ce que la préparation de l'uranium soit essentiellement complète; et

(d) récupération du peroxyde d'uranium à partir des impuretés phosphatées dissoutes.

2. Procédé de la revendication 1 caractérisé en ce que le titre d'$U_3O_8$ est de 150 à 200 g/l.

3. Procédé de la revendication 2 caractérisé en ce que les composés réagissants du stade (c) sont maintenus en contact pendant 2 à 3 heures.

4. Procédé de la revendication 3 caractérisé en ce que le peroxyde d'uranium est récupéré par filtration.